# EUROPEAN PATENT APPLICATION

(11) **EP 3 628 648 A1**
(43) Date of publication of application: **01.04.2020**
(21) Application number: 19196018.6
(22) Date of filing: 06.09.2019
(51) Int. Cl.: C04B 28/24, C04B 28/26, C04B 28/34, F01D 5/14

(54) **CEMENT**

(30) Priority: 28.09.2018 GB 201815832
(71) Applicant: Rolls-Royce plc, London N1 9FX (GB)
(72) Inventor: Mackilligin, Harry, Derby, Derbyshire DE24 8BJ (GB)
(74) Representative: Rolls-Royce plc

(57) **Abstract**

The present disclosure relates to a cementious composition (e.g. for mounting a strain gauge within a gas turbine engine) comprising: part A comprising an acidic solution of a metal salt; part B comprising silica and one or more metal oxides; and part C comprising colloidal silica and/or a silicate solution. Part A may comprise an acidic aluminium phosphate solution. Part B may comprise one or more or all of titanium oxide, chromium oxide, alumina and barium oxide

## Description

### Field of the Disclosure

The present disclosure relates to a cement composition. In particular, the disclosure relates to a cement composition for forming a cement for use in high temperature environments such as in a gas turbine engine.

### Background

There are many high temperature environments where bonding of components is required. For example, strain gauges are often installed on various gas turbine engine structures (both static and moving) such as blades, vanes, discs and casings in order to monitor strain levels. When mounted in hot sections of a gas turbine engine (e.g. in the compressor and turbine sections), temperatures can reach up to 900°C and thus the cement used to bond the strain gauges in these hot sections needs to be able to withstand the high temperature environments. Cements for bonding strain gauges also need to be electrically insulating in order to isolate the strain gauges from any conductive material to allow them to obtain an accurate resistance and therefore strain measurement.

Bonding cements for components such as lead-out wiring needs to be able to withstand even higher temperatures e.g. in excess of 1300°C.

Such cements also need to be able to withstand the high centrifugal forces experienced in some locations within the gas turbine engine e.g. on high pressure turbine blades.

There are currently commercially available high temperature cements but these contain ammonium dichromate which is a carcinogenic compound and which is being phased out under the REACH legislation

There exists the need for a new cement formulation that can withstand high temperature environments and harsh conditions and that does not contain ammonium dichromate.

### Summary

According to a first aspect there is provided a cementious composition comprising:
part A comprising an acidic solution of a metal salt;
part B comprising silica and one or more metal oxides; and
part C comprising colloidal silica and/or a silicate solution.

The present inventors have found that a cement formed from such a cementious composition can withstand the very high temperatures and harsh environments found in hot sections of a gas turbine engine. The composition does not contain carcinogenic ammonium dichromate. In addition, the metal oxide content may be higher than in known compositions giving the resulting cement a similar coefficient of expansion to the underlying metal component.

Optional features will now be set out. These are applicable singly or in any combination with any aspect.

Part A comprises an acidic solution of a metal salt. The acidic solution may have a pH of less than 2.

The metal in the metal salt may be aluminium. The metal in the metal salt may be boron.

The salt in the metal salt may be phosphate.

The solution may be obtained by mixing (e.g. refluxing) the metal salt with a strong acid (e.g. having a pH<2 such as pH 1) and water. The strong acid may be phosphoric acid.

The acidic solution of a metal salt may be mono aluminium phosphate solution.

Part B comprises silica. In some embodiments, the silica is silica flour or silica sand. The silica may have a particle size of between 10 to 100 microns.

The silica (e.g. the silica flour/sand) can be used in an amount greater than 20 wt% e.g. greater than 30 or 40 wt%. The silica (e.g. the silica flour/sand) may make up the majority (i.e. greater than 50 wt%) of part B. For example, the silica may make up greater than 60 wt% e.g. greater than 70 wt% of part B.

In some embodiment, the silica is used in an amount of less than 90 wt% e.g. less than 80 wt%.

In some embodiments, the silica is used in an amount between 70 and 80 wt%.

The one or more metal oxide(s) in part B may include one or more oxides of a transition metal e.g. one or more oxides of one or more of titanium (e.g. titanium oxide/titanium dioxide), chromium (e.g. chromium oxide/dioxide), and/or zirconium (e.g. zirconium oxide/zirconium dioxide).

The one or more metal oxides may include aluminium oxide (e.g. alumina or fused alumina).

The one or more metal oxides may include one or more alkaline earth metal oxides. For example, the one or more metal oxides may include oxides of one or more of barium (e.g. barium oxide), calcium (e.g. calcium oxide) and/or magnesium (e.g. magnesium oxide).

In some embodiments, part B comprises a mixture of two or more metal oxides e.g. three or more metal oxides such as four metal oxides.

In some embodiments, part B comprises two or more (e.g. three or four) metal oxides selected from the group consisting of transition metal oxides, aluminium oxide, and alkaline earth metal oxides.

In some embodiments, part B comprises two or more transition metal oxides e.g. titanium dioxide and chromium oxide. The transition metal oxide(s) may make up the majority (i.e. greater than 50 wt%) of the metal oxides used in part B. The transition metal oxide(s) may make up greater than 60 wt%, e.g. greater than 70 or 80 wt% of the metal oxides used in part B.

Titanium dioxide may make up the majority (i.e. greater than 50 wt%) of the metal oxides used in part B. Titanium dioxide may make up to 60 wt% of the metal oxides used in part B.

In some embodiments, part B comprises the combination of one or more transition metal oxide (e.g. titanium dioxide and/or chromium oxide) with an alkaline earth metal oxide (e.g. barium oxide) and/or alumina.

In some embodiments, part B comprises the combination of one or more transition metal oxide (e.g. titanium dioxide and/or chromium oxide) with an alkaline earth metal oxide (e.g. barium oxide) and alumina.

In some embodiments, part B comprises the combination of two transition metal oxides (e.g. titanium dioxide and chromium oxide) with an alkaline earth metal oxide (e.g. barium oxide) and/or alumina.

In some embodiments, part B comprises the combination of two transition metal oxides (e.g. titanium dioxide and chromium oxide) with an alkaline earth metal oxide (e.g. barium oxide) and alumina.

The alumina and alkaline earth metal oxide (e.g. barium oxide) may be in a 1:1 wt% amount ratio.

Part B may be formed by ball-milling the silica (flour/sand) and metal oxide(s) together.

Part B could additionally include an electrically insulating additive e.g. boron nitride. The electrically insulating additive may be added in an amount up to 60 wt%.

Part C may comprise colloidal silica which is an aqueous dispersion of silica such as that commercially available from Monsanto as Syton® X30.

Part C may comprise a silicate solution such as potassium or sodium silicate solution.

In a second aspect, there is provided a cement formed by mixing parts A, B and C of the cementious composition of the first aspect.

In some embodiments, the cement is formed by pre-mixing parts A and C and then adding part B.

In some embodiments, the cement is formed by mixing parts A and C in a ratio of between 1.5:10 and 4.5:10 (v/v) e.g. in a 3:10 (v/v) ratio and then adding part B.

In some embodiments, the cement is formed by mixing parts A and C and then adding 55-65wt% (e.g. around 60 wt%) of part B to 45-35wt% (e.g. around 40wt%) of the combined parts A and C.

In some embodiments, the cement is formed by curing said cement after mixing of parts A, B and C. In some embodiments, curing said cement comprises a plurality of curing periods wherein each successive curing period is at a higher temperature than the previous curing period. For example, there may be a first curing period at ambient temperature followed by a second curing period at a higher temperature. There may be further curing periods at further higher temperatures. The length of the curing period(s) at higher temperatures may be greater than the curing period at ambient temperature.

In a third aspect there is a method of bonding a first component and a second component said method comprising: preparing a cement by mixing parts A, B and C of the cementious composition of the first aspect, applying the cement to at least one of the first and second components, abutting the components to allow the cement to bond them together.

In some embodiments, the method comprises pre-mixing parts A and C and then adding part B.

In some embodiments, the method comprises mixing parts A and C in a ratio of between 1.5:10 and 4.5:10 (v/v) e.g. in a 3:10 (v/v) ratio and then adding part B.

In some embodiments, the method comprises mixing parts A and C and then adding 55-65wt% (e.g. around 60 wt%) of part B to 45-35wt% (e.g. around 40wt%) of the combined parts A and C.

In some embodiments, the method comprises applying the cement to the first component, curing said cement and affixing the second component to the first.

In some embodiments, the method comprises a plurality of curing periods wherein each successive curing period is at a higher temperature than the previous curing period. For example, there may be a first curing period at ambient temperature followed by a second curing period at a higher temperature. There may be further curing periods at further higher temperatures. The length of the curing period(s) at higher temperatures may be greater than the curing period at ambient temperature.

In some embodiments, the method comprises applying one or more further layers of the cement and curing each layer prior to affixing the second component.

In some embodiments, the method comprises applying one or more top layers of cement over the second component and curing the cement (e.g. curing as described above).

In some embodiments, the first component is selected from a blade, vane, disc and casing. In some embodiments, the second component is selected from a strain gauge and a lead-out wiring.

In a fourth aspect, there is provided a gas turbine engine comprising a first component and a second component, wherein the first and second components are bonded together using the cementious composition of the first aspect/the cement of the second aspect/the method of the third aspect.

In some embodiments, the first component is selected from a blade, vane, disc and casing. In some embodiments, the second component is selected from a strain gauge and a lead-out wiring.

Accordingly, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

Embodiments will now be described by way of example only, with reference to the Figures, in which:
Figure 1 is a sectional side view of a gas turbine engine;
Figure 2 is a close up sectional side view of an upstream portion of a gas turbine engine; and
Figure 3 is a partially cut-away view of a gearbox for a gas turbine engine.

### Detailed Description and Further Optional Features

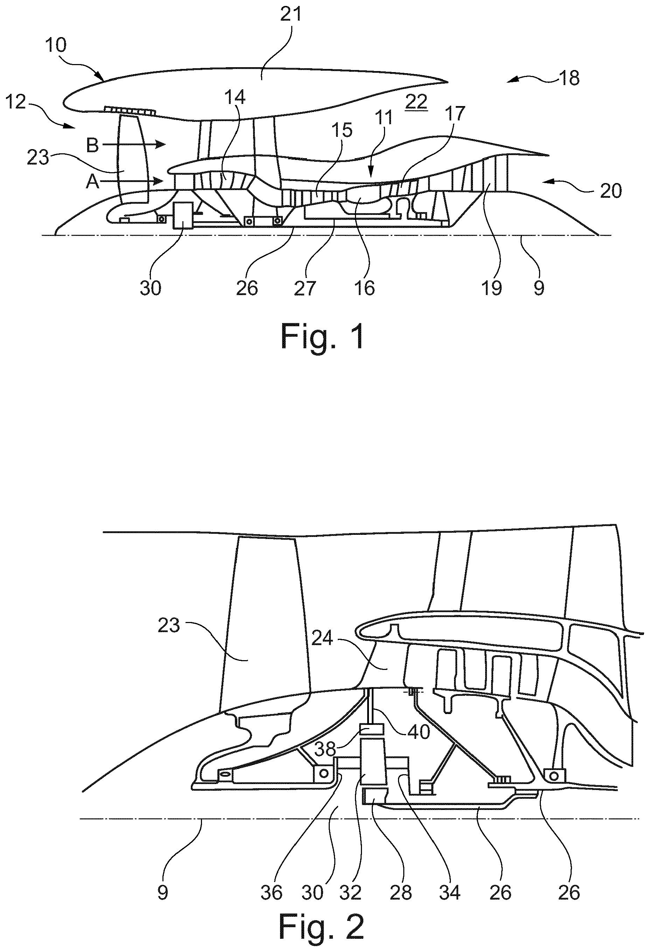

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26.

In use, the core airflow A is accelerated and compressed by the low pressure compressor 14 and directed into the high pressure compressor 15 where further compression takes place. The compressed air exhausted from the high pressure compressor 15 is directed into the combustion system 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust.

Arrangements of the present disclosure may be particularly, although not exclusively, beneficial for fans 23 that are driven via a gearbox 30. Accordingly, the gas turbine engine may comprise a gearbox 30 that receives an input from the core shaft 26 and outputs drive to the fan 23 so as to drive the fan 23 at a lower rotational speed than the core shaft 26. The input to the gearbox 30 may be directly from the core shaft 26, or indirectly from the core shaft 26, for example via a spur shaft and/or gear.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

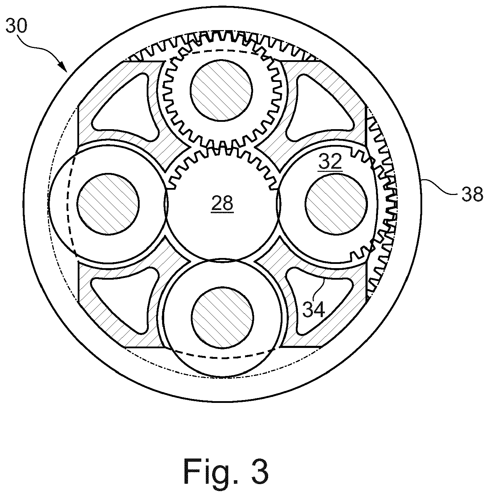

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The gas turbine engine 10 may comprise one or more strain gauges located on one or more of the blades (e.g. the blades of the high pressure compressor 15), vanes (not shown), discs (not shown) or casings.

Where a strain gauge is mounted on a blade of the high pressure compressor 15 (or indeed anywhere else in the hot sections of the gas turbine engine), the cement mounting the strain gauge to the blade must be able to withstand the high temperatures >900°C experienced in the hot sections.

A cement suitable for mounting the strain gauge is prepared as follows.

Part A of the cementious composition is prepared by adding 200g of aluminium phosphate basic to refluxing concentrated phosphoric acid (260mL) and distilled water (200mL) over 30 minutes until a clear, viscous solution of mono aluminium phosphate stock solution was produced. This solution was allowed to cool.

Part B of the cementious composition was prepared by ball-milling 164g of silica flour, 36g of titanium dioxide, 14g of chromium oxide, 5g or fused silica and 5g of barium oxide for 30 minutes.

Next the cooled mono aluminium phosphate stock solution (part A) was mixed in a ratio of 3:10 (v/v) with colloidal silica (Syton® X 30) (part C).

Then 10g of part B was added to 6.75g of the combined parts A and C and stirred until a homogenous paste was formed.

Three layers of the mixed cement composition was applied to a component using a brush and then cured using the following cure cycle: 30 minutes air dry and ambient temperature, 30 minutes at 90°C, 20 minutes at 120°C, 1 hour at 400°C and a final post-cure at 600°C for 1 hour.

It will be understood that the disclosure is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A cementious composition comprising:
part A comprising an acidic solution of a metal salt;
part B comprising silica and one or more metal oxides; and
part C comprising colloidal silica and/or a silicate solution.

2. A composition according to claim 1 wherein the metal salt is an aluminium salt.

3. A composition according to claim 2 wherein part A comprises an acidic aluminium phosphate solution.

4. A composition according to any one of the preceding claims wherein part B comprises silica having a particle size of between 10 to 100 microns.

5. A composition according to any one of the preceding claims wherein part B comprises silica in an amount between 70 and 80 wt%.

6. A composition according to any one of the preceding claims wherein part B comprises one or more metal oxides selected from the group consisting of transition metal oxides, aluminium oxide, and/or alkaline earth metal oxides.

7. A composition according to claim 6 wherein part B comprises a mixture of two or more metal oxides.

8. A composition according to claim 7 wherein part B comprises the combination of one or more transition metal oxide with an alkaline earth metal oxide and/or alumina.

9. A composition according to claim 8 wherein part B comprises the combination of one or more transition metal oxide with an alkaline earth metal oxide and alumina.

10. A composition according to claim 8 or 9 wherein part B comprises two transition metal oxides.

11. A composition according to any one of claims 6 to 10 wherein part B comprises one or more or all of titanium oxide, chromium oxide, alumina and barium oxide

12. A composition according to any one of the preceding claims wherein part C comprises colloidal silica or a potassium or sodium silicate solution.

13. A cement formed by mixing parts A, B and C of the cementious composition according to any one of the preceding claims.

14. The cement of claim 13 formed by mixing parts A and C in a ratio of between 1.5:10 and 4.5:10 (v/v) and then adding part B.

15. The cement of claim 14 formed by mixing parts A and C and then adding 55-65wt% of part B.

16. A method of bonding a first component and a second component said method comprising: preparing a cement according to any one of claims 13 to 15, applying the cement to at least one of the first and second components, abutting the components to allow the cement to bond them together.

17. A method according to claim 16 comprising applying the cement to the first component, curing said cement and affixing the second component to the first.

18. A method according to claim 17 wherein curing the cement comprises a plurality of curing periods wherein each successive curing period is at a higher temperature than the previous curing period.

19. A method according to any one of claims 16 to 18 wherein the first component is selected from a blade, vane, disc and casing and the second component is selected from a strain gauge and a lead-out wiring.

20. A gas turbine engine comprising a first component and a second component, wherein the first and second components are bonded together using the cementious composition of any one of claims 1 to 12, the cement of any one of claims 13 to 15 or the method of any one of claims 16 to 19.
